Europäisches Patentamt

European Patent Office

Office européen des brevets

(19)

(11) Veröffentlichungsnummer: **0 271 660 B1**

(12) **EUROPÄISCHE PATENTSCHRIFT**

(45) Veröffentlichungstag der Patentschrift: **28.08.91**

(51) Int. Cl.⁵: **G01F 1/68, G01F 1/48**

(21) Anmeldenummer: **87114740.1**

(22) Anmeldetag: **09.10.87**

(54) Vorrichtung zur Bestimmung des Massendurchflusses eines strömenden Mediums.

(30) Priorität: **08.11.86 DE 3638138**

(43) Veröffentlichungstag der Anmeldung:
**22.06.88 Patentblatt 88/25**

(45) Bekanntmachung des Hinweises auf die Patenterteilung:
**28.08.91 Patentblatt 91/35**

(84) Benannte Vertragsstaaten:
**DE FR GB IT**

(56) Entgegenhaltungen:
**DE-A- 3 248 603**
**FR-A- 2 522 811**
**US-A- 4 399 697**
**US-A- 4 561 303**

**PATENT ABSTRACTS OF JAPAN, Band 6, Nr. 175 (P-141)[1053], 9. September 1982 & JP-A-57-93 212**

**PATENT ABSTRACTS OF JAPAN, Band 6, Nr. 175 (P-141)[1053], 9. September 1982 & JP-A-57-93 211**

(73) Patentinhaber: **ROBERT BOSCH GMBH**
**Postfach 50**
**W-7000 Stuttgart 1(DE)**

(72) Erfinder: **Hecht, Hans, Dipl.-Phys.**
**Hebichstrasse 12**
**W-7015 Korntal-Münchingen 1(DE)**
Erfinder: **Kienzle, Wolfgang, Dipl.-Ing.**
**Schlossgartenstrasse 18**
**W-7254 Hemmingen 1(DE)**
Erfinder: **Kleinhans, Josef, Dipl.-Ing.**
**Markgröningerstrasse 69**
**W-7140 Ludwigsburg(DE)**
Erfinder: **Kuhn, Ulrich, Dr., Dipl.-Phys.**
**Birkenweg 5**
**W-7253 Renningen 2(DE)**
Erfinder: **Wocher, Berthold, Dr.-Ing.**
**Korntaler Strasse 23**
**W-7250 Leonberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einer Vorrichtung zur Bestimmung der Masse eines strömenden Mediums nach der Gattung des Patentanspruchs 1. Aus der US-A-43 99 697 ist bereits eine Vorrichtung mit zwei als Schichten auf einem Träger ausgebildeten Widerständen bekannt, von denen die erste Schicht als Heizwiderstand dient und unmittelbar auf dem Träger befestigt ist, während die zweite Schicht als temperaturabhängiger Meßwiderstand ausgebildet ist und unter Zwischenlage einer elektrisch isolierenden Schicht auf der ersten Schicht aufliegt. Die Heizwiderstand und Meßwiderstand trennende Isolationsschicht ist so dünn, daß ein guter Wärmeübergang vom Heizwiderstand auf den Meßwiderstand möglich ist. Änderungen des Massenstromes führen zu einem veränderten Wärmeübergang an der Oberfläche von Meßwiderstand und Träger und, da der Meßwiderstand temperaturabhängig ist, zu einer Änderung des elektrischen Widerstandes des Meßwiderstandes. Hierdurch kommt es zur Verstimmung einer Meßschaltung, welche durch Veränderung des Heizstromes am Heizwiderstand kompensiert wird. Als Maß für die Masse des strömenden Mediums dient die dem Heizwiderstand zugeführte elektrische Leistung. Ein zusätzlicher temperaturabhängiger Widerstand, welcher auf einem weiteren Träger angeordnet ist, dient der Kompensation der Temperatur des Mediums.

Nachteilig an dieser bekannten Vorrichtung ist, daß nicht nur der an das zu messende Medium konvektiv abgegebene Wärmestrom erfaßt wird, sondern auch der Wärmestrom, welcher durch Wärmeleitung vom Träger an die Halterung des Trägers übergeht. Da der Träger über eine im Vergleich zu den Widerständen große Wärmekapazität verfügt, führt ein solcher unerwünschter Wärmeübergang zu einem verzögerten Einschaltvorgang bis zum Erreichen der erforderlichen Betriebstemperatur der Meßanordnung sowie zu einem langsamen Ansprechen auf Änderungen der Masse des strömenden Mediums. Die geometrische Anordnung des Meßwiderstandes bei der gezeigten Vorrichtung kann also nicht als optimal angesehen werden, da seitliche Wärmeabflüsse vom Träger die Exaktheit des Meßergebnisses negativ beeinflussen. Die Ansprechgeschwindigkeit des Meßwiderstandes auf Durchflußänderungen ist daher gering.

Die bekannte Vorrichtung weist außerdem den Nachteil einer hohen Verschmutzungsneigung auf, da, insbesondere bei Verwendung der Vorrichtung im Ansaugrohr einer Brennkraftmaschine, Schmutzpartikel aus der Saugrohratmosphäre sich an der vorderen Kante des Meßwiderstandes anlagern und bei längerem Betrieb zu einer negativen Beeinflussung des Meßergebnisses führen.

Bekannt ist ebenfalls eine Vorrichtung nach der JP-A-5 793 212, bei der auf einer Flachseite etwa in der Mitte eines ungeschlitzten Substrates eine Heizwiderstandsschicht und unter Zwischenlage einer Isolierschicht darüber eine Meßwiderstandsschicht angeordnet ist.

Bei einer weiteren bekannten Vorrichtung nach der JP-A-5 793 211 sind auf einem ungeschlitzten Substrat Heizwiderstandsschicht und Meßwiderstandsschicht hintereinander auf der gleichen Flachseite vorgesehen.

Weiterhin ist nach der FR-A-25 22 811 eine Vorrichtung bekannt, bei der nebeneinander auf einer Flachseite eines geschlitzten Substrates eine Meßwiderstandsschicht und andere Widerstände einer Meßbrücke angeordnet sind.

Der Erfindung liegt nun die Aufgabe zugrunde, eine Vorrichtung zur Bestimmung der Masse eines strömenden Mediums zu schaffen, die bei einem einfachen mechanischen und elektronischen Aufbau eine kurze Einschaltzeit, eine kurze Ansprechzeit auf Durchflußänderungen sowie auch bei längerem Gebrauch eine hohe Meßgenauigkeit aufweist.

Vorteile der Erfindung

Die erfindungsgemäße Vorrichtung mit den kennzeichnenden Merkmalen des Patentanspruchs 1 weist den Vorteil einer kurzen Ansprechzeit auf Durchflußänderungen auf, da Größe und Lage des Heizwiderstandes relativ zum Meßwiderstand so bemessen sind, daß ein Wärmeabfluß vom Träger zur Befestigung des Trägers keinen Einfluß auf das Meßergebnis hat und der Meßwiderstand über seiner gesamten Fläche ein bei jeder Durchflußmenge nahezu gleiches Temperaturprofil aufweist. Vorteilhaft ist es insbesondere, zur Verhinderung eines störenden Wärmeflusses von und zu den Widerständen thermisch isolierende Schlitze in den Träger einzuarbeiten. Weiterhin ist es von Vorteil, den Meßwiderstand in möglichst großer Entfernung von der Anströmkante des Trägers zu befestigen, um auf diese Weise die Verschmutzungsneigung im Bereich des Meßwiderstandes gering zu halten.

Durch die in den abhängigen Patentansprüchen aufgeführten Maßnahmen sind vorteilhafte Weiterbildungen und Verbesserungen der im Patentanspruch 1 angegebenen Vorrichtung zur Bestimmung der Masse eines strömenden Mediums möglich.

Weitere Widerstände der Vorrichtung sind vorteilhafterweise auf dem gleichen Träger untergebracht und werden ebenfalls durch thermisch isolierende Schlitze voneinander getrennt. Da die Auswirkungen einer Verschmutzung bei diesen Widerständen nicht so gravierend sind wie beim Meßwiderstand, können diese stromaufwärts des Meßwiderstandes plaziert werden.

Die Fertigung der erfindungsgemäßen Vorrichtung wird wesentlich vereinfacht, wenn die Widerstände als Schichten ausgeführt werden und für verschiedene Widerstände die gleichen Schichten mit folglich gleichem Quadratwiderstand Verwendung finden. Die exakte Festlegung der jeweiligen Widerstandscharakteristik erfolgt dann durch Abtragen von Widerstandmaterial, etwa durch mittels Laserschnitten durchgeführte Mäandrierungen der Widerstandsschicht.

Zeichnung

Ein Ausführungsbeispiel der Erfindung ist in der Zeichnung dargestellt und in der nachfolgenden Beschreibung näher erläutert. Es zeigen Figur 1 ein Schaltbild zu der Erfindung, Figur 2 eine Ansicht der Vorderseite einer Ausführungsform einer erfindungsgemäßen Vorrichtung zur Bestimmung der Masse eines strömenden Mediums, Figur 3 eine Ansicht der entsprechenden Rückseite.

Beschreibung des Ausführungsbeispieles

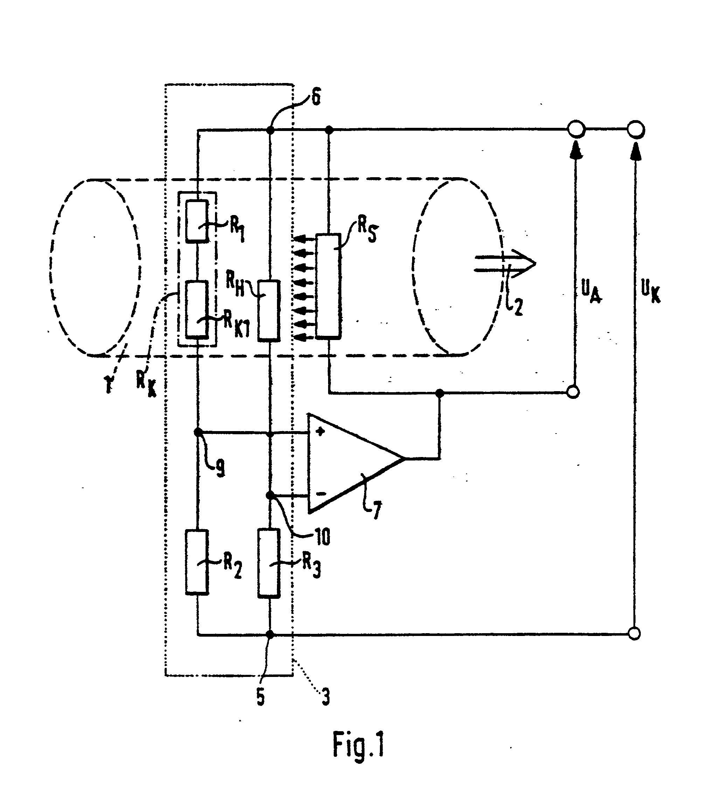

In Figur 1 ist mit der Bezugsziffer 1 ein von einem Fluid durchströmtes Rohr bezeichnet, wobei die Strömungsrichtung des Mediums mit einem Pfeil 2 gekennzeichnet wird. Das Rohr 1 kann beispielsweise das Ansaugrohr einer Brennkraftmaschine sein. In das strömende Medium ist ein Widerstand $R_H$ eingebracht, der zur Erfassung der Durchflußmenge durch das Rohr 1 dient und der im folgenden als Meßwiderstand bezeichnet wird. Dieser Meßwiderstand $R_H$ ist als Schichtwiderstand oder Filmwiderstand auf einem in Figur 1 nicht dargestellten Substrat ausgebildet und ist Bestandteil einer beispielsweise als Brückenschaltung ausgebildeten Widerstandserfassungsanordnung 3. Diese Widerstandserfassungsanordnung 3 wird ergänzt durch die Widerstände $R_1$, $R_{K1}$, $R_2$ und $R_3$ und ist als Widerstandsmeßbrücke angelegt. Ausgehend von einem Fußpunkt 5 sind in jeweils einem Brückenzweig die Widerstände $R_2$, $R_{K1}$ und $R_1$ bzw. $R_3$ und $R_H$ in Reihe geschaltet. Die Anschlußleitungen der Widerstände $R_1$ und $R_H$ sind in einem Punkt 6 zusammengeführt. Einem Regelverstärker 7 werden die Signale eines Punktes 9 als Verbindungspunkt der Widerstände $R_{K1}$ und $R_2$ sowie eines Punktes 10 als Verbindungspunkt der Widerstände $R_H$ und $R_3$ zugeführt.

Der Regelverstärker 7 ist zum Beispiel als Differenzverstärker ausgebildet, wobei die Erfindung jedoch nicht auf derartige Differenzverstärker beschränkt ist, sondern im allgemeinen auf jede analoge und digitale Regelfunktion anwendbar ist.

Die Ausgangsgröße des Regelverstärkers 7 wird einem Widerstand $R_S$ zugeführt, dessen andere Anschlußleitung mit dem Punkt 6 in Verbindung steht, so daß insgesamt eine geschlossene Schleife entsteht.

Es soll betont werden, daß die Widerstandserfassungsanordnung 3 nicht nur durch eine Brückenschaltung, sondern auch durch andere Widerstandsmeßschaltungen realisierbar ist. Zur Realisierung der Erfindung ist daher nicht unbedingt eine Brückenschaltung erforderlich, auch brückenähnliche Meßschaltungen sind denkbar.

Die prinzipielle Wirkungsweise dieser Anordnung ist wie folgt:
Durch den Ausgangsstrom des Regelverstärkers 7 erfolgt eine Aufheizung des im folgenden als Heizwiderstand bezeichneten Widerstandes $R_S$, wobei die Heizleistung an diesem Widerstand im wesentlichen durch die Brückendiagonalspannung am Regelverstärker 7 bestimmt ist. Der Heizwiderstand $R_S$ ist so ausgeführt, daß er in möglichst unmittelbarem Wärmekontakt mit dem Meßwiderstand $R_H$ steht. Durch den guten Wärmekontakt zwischen $R_S$ und $R_H$ wird der Meßwiderstand $R_H$ auf eine weit oberhalb der Mediumtemperatur liegende Übertemperatur gebracht. Ändert sich nun die das Rohr 1 durchfließende Strömungsmenge, so ändert sich aufgrund der veränderten konvektiven Wärmeübertragung die Temperatur des Meßwiderstandes $R_H$ und es wird, da der Meßwiderstand $R_H$ einen von Null verschiedenen Temperaturkoeffizienten aufweist, die Widerstandserfassunganordnung 3 verstimmt, der Regelverstärker 7 verändert daraufhin den Ausgangsstrom, welcher zum Heizwiderstand $R_S$ führt. Über die geschlossene Schleife werden also Änderungen des Meßwiderstandes $R_H$ infolge einer ab- oder zufließenden Wärmemenge stets durch Änderung der Heizleistung des Heizwiderstandes $R_S$ kompensiert, so daß der Meßwiderstand $R_H$ auf einer bestimmten Temperatur bzw. auf einem bestimmten Widerstandswert gehalten wird. Der Heizstrom, die Heizleistung bzw. die Ausgangsspannung $U_A$ des Regelverstärkers 7 sind ein Maß für die Durchflußmasse des strömenden Mediums.

Da der Heizstrom, die Heizleistung bzw. die Ausgangsspannung $U_A$ des Regelverstärkers 7 jedoch zusätzlich auch von der Temperatur des Strömungsmediums abhängen, müssen Temperaturschwankungen des Strömungsmediums kompensiert werden. Hierzu dient ein Kompensationswiderstand $R_K$, welcher ebenfalls dem strömenden Medium ausgesetzt ist und welcher sich aus den in Reihe geschalteten Widerständen $R_{K1}$ und $R_1$ zusammensetzt. Während der Widerstand $R_{K1}$ als Filmwiderstand ausgebildet ist und in gleicher Technik sowie im gleichen Arbeitsgang wie der Meßwiderstand $R_H$ hergestellt werden kann, ist der Widerstand $R_1$ ein Schichtwiderstand, dessen Ab-

gleich - etwa durch mäandrierte Schnitte - in der Weise erfolgt, daß die Temperaturkoeffizienten des Kompensationswiderstandes $R_K$ und des Meßwiderstandes $R_H$ je nach Auswerteverfahren zur Erfassung der Signalgröße in einer vorgegebenen Beziehung zueinander stehen.

Die Widerstandserfassungsanordnung 3 wird vervollständigt durch einen ersten Referenzwiderstand $R_2$, welcher sich zwischen Fußpunkt 5 und Punkt 9 befindet, sowie einen zweiten Referenzwiderstand $R_3$, welcher sich zwischen Fußpunkt 5 und Punkt 10 befindet. Es ist nicht notwendig, die Referenzwiderstände $R_2$ und $R_3$ dem strömenden Medium auszusetzen, jedoch sollten $R_2$ und $R_3$ in möglichst engem Wärmekontakt zueinander stehen, wodurch sich eine enge Tolerierung des Temperaturkoeffizienten der Widerstände $R_2$ und $R_3$ erübrigt.

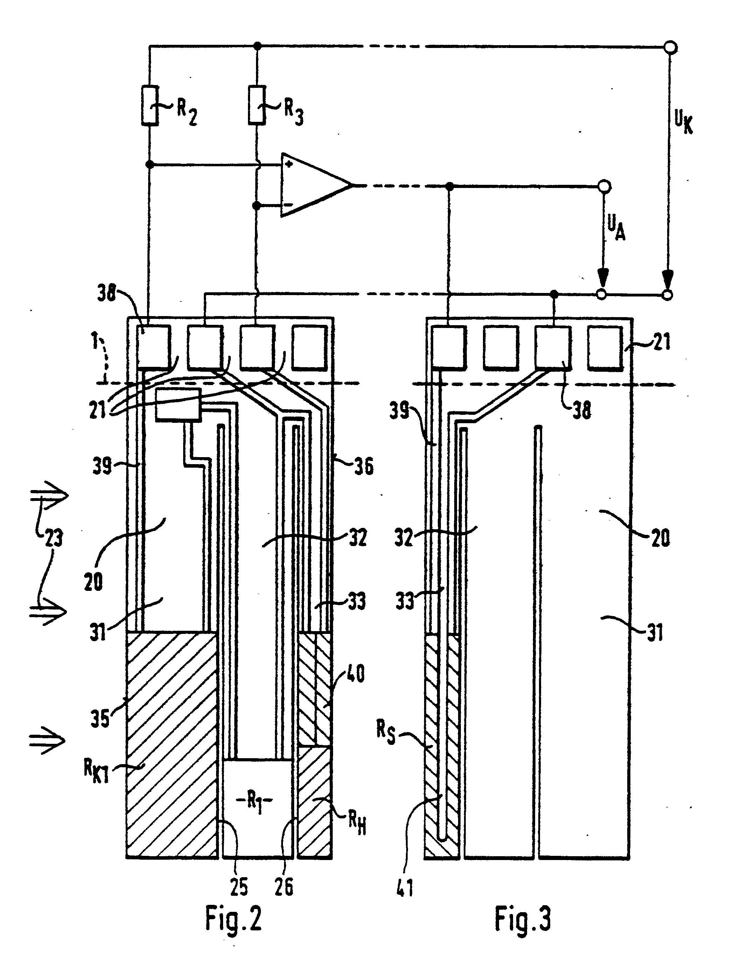

Die Figuren 2 und 3 zeigen eine bevorzugte Ausführungsform der Erfindung mit Heizwiderstand $R_S$, Meßwiderstand $R_H$, Filmwiderstand $R_{K1}$ und Schichtwiderstand $R_1$. Alle diese Widerstände sind als dünne Schichten auf einem als Träger dienenden, plattenförmigen Substrat 20 angeordnet, welches etwa rechteckförmig ist und welches an einer seiner schmalen Seiten im Bereich einer Befestigung 21 am vom zu messenden Medium durchströmten Rohr 1 befestigt ist. Senkrecht zu der mit Pfeilen 23 bezeichneten Mediumströmungsrichtung sind im Substrat 20 zwei Schlitze 25, 26 eingebracht, welche an dem der Befestigung 21 abgewandten Ende des Substrates 20 beginnen und welche bis nahe an die Befestigung 21 reichen. Durch die Schlitze 25, 26 wird das Substrat 20 in eine erste Lippe 31, eine zweite Lippe 32 sowie eine dritte Lippe 33 unterteilt. Dabei ist die erste Lippe 31 einerseits durch die der Strömung entgegengerichtete Anströmkante 35 des Substrates 20 begrenzt, andererseits durch den ersten Schlitz 25; die zweite Lippe 32 des Substrates 20 ist einerseits durch den ersten Schlitz 25 und andererseits durch den zweiten Schlitz 26 begrenzt; die dritte Lippe 33 des Substrates 20 ist einerseits durch den zweiten Schlitz 26 begrenzt und andererseits durch eine Abströmkante 36 des Substrates 20.

Im Bereich der Befestigung 21 befinden sich auf dem Substrat 20 Kontaktflächen 38, welche einerseits über auf dem Substrat 20 angebrachte elektrische Leiterbahnen 39 mit den Widerständen $R_H$, $R_S$, $R_{K1}$ und $R_1$ verbunden sind und welche andererseits mit den Widerständen $R_2$, $R_3$, dem Regelverstärker 7 und dem Nulleiter (Punkt 6 in Figur 1) elektrisch verbunden sind. Die Widerstände $R_S$, $R_H$, $R_{K1}$ und $R_1$ bedecken jeweils den der Befestigung 21 abgewandten Teil der Lippen 31, 32, 33 und sind vorteilhafterweise so angeordnet, daß der Filmwiderstand $R_{K1}$ auf der ersten Lippe 31, der Schichtwiderstand $R_1$ auf der zweiten Lippe 32 und der Meßwiderstand $R_H$ auf der dritten Lippe 33 angeordnet ist. Der Heizwiderstand $R_S$ befindet sich bei dem Ausführungsbeispiel entsprechend den Figuren 2 und 3 auf der Rückseite des Substrates 20 und bedeckt den der Befestigung 21 abgewandten Teil der dritten Lippe 33. Der Meßwiderstand $R_H$ ist somit auf der einen und der Heizwiderstand $R_S$ auf der anderen Seite der dritten Lippe 33 des Substrates 20 angeordnet, $R_H$ und $R_S$ stehen unter Zwischenlage des Substrates 20 in thermischem Kontakt.

Die geometrische Größe der Widerstände in bezug auf die Größe des Substrates 20 ist so bemessen, daß der Filmwiderstand $R_{K1}$ und der Heizwiderstand $R_S$ ungefähr die der Befestigung 21 abgewandte Hälfte des Substrates 20 bedecken. Die Länge der Schlitze 25 und 26 ist so bemessen, daß diese weiter in Richtung zur Befestigung 21 reichen als jeder der Widerstände $R_S$, $R_H$, $R_{K1}$ und $R_1$, wodurch eine sehr gute thermische Trennung der einzelnen Lippen 31, 32, 33 und damit auch der einzelnen Widerstände erreicht wird.

Die Fertigung der Vorrichtung wird wesentlich vereinfacht, wenn jene Widerstandsschichten, welche den Filmwiderstand $R_{K1}$ und den Meßwiderstand $R_H$ bilden, aus dem gleichen Material gefertigt sind und sich in etwa gleich weit in Richtung auf die Befestigung 21 erstrecken. Da der Filmwiderstand $R_{K1}$ und der Meßwiderstand $R_H$ aus dem gleichen Material mit folglich gleichem Quadratwiderstand hergestellt sind, werden diese Widerstandsschichten zur Herstellung des erforderlichen individuellen Widerstands mit Mäanderstrukturen versehen. Dies kann etwa durch in Figur 2 nicht dargestellte Laserschnitte erfolgen. Als Material für die Widerstandsschichten, welche $R_{K1}$ und $R_H$ bilden, kommt beispielsweise Platin in Frage.

Zwischen dem Filmwiderstand $R_{K1}$ und dem Meßwiderstand $R_H$ ist auf der zweiten Lippe 32 des Substrats 20 der Schichtwiderstand $R_1$ aufgetragen, beispielsweise in einem Dickschichtverfahren.

Um Wärmeströmungen aus dem Bereich des Meßwiderstandes $R_H$ in Richtung auf die Befestigung 21 zu verhindern, erstreckt sich der Heizwiderstand $R_S$ weiter in Richtung auf die Befestigung 21 als der Meßwiderstand $R_H$. Eine derartige Begrenzung der effektiven Fläche des Meßwiderstandes $R_H$ wird erreicht, indem durch geeignete Mäandrierung nur der der Befestigung 21 abgewandte Teil jener Widerstandsschicht, welche den Meßwiderstand $R_H$ bildet, elektrisch leitend gemacht wird, während der der Befestigung 21 zugewandte Teil jener Widerstandsschicht ohne elektrische Funktion bleibt und eine elektrisch nicht angeschlossene Schicht 40 bildet. Durch diese geometrische Anordnung der wirksamen Fläche des Meßwiderstandes $R_H$ wird erreicht, daß die durch die Ausdehnung des Heizwiderstandes $R_S$ festgelegte aufgeheizte Zone des Substrates 20 weiter in Richtung zur Befestigung 21 ragt als der Meßwiderstand $R_H$ - ein störender Wärmeabfluß aus dem Bereich des Meßwiderstandes $R_H$ in Richtung zur Befestigung 21 wird auf diese Weise verhindert, die Ansprechgeschwindigkeit des Meßwiderstandes $R_H$ auf Durchflußänderungen damit vergrößert, da sich bei Durchflußänderungen nicht jeweils ein neues Temperaturprofil am Meßwiderstand $R_H$ einstellen muß.

Zum Abgleich seines individuellen Widerstandes kann auch der schichtförmige Widerstand $R_S$ mäandriert werden.

Die Figur 3 stellt die Rückseite der erfindungsgemäßen Vorrichtung mit dem auf der dritten Lippe 33 aufgebrachten Heizwiderstand $R_S$ dar, welcher beispielsweise einen sich in Richtung auf die Befestigung 21 hin öffnenden Einschnitt 41 und damit die Form eines stilisierten U aufweist. Auch auf der Rückseite des Substrats 20 befinden sich Kontaktflächen 38, welche über Leiterbahnen 39 mit den Schenkeln des U-förmigen Heizwiderstandes $R_S$ in Verbindung stehen. Im Bereich der ersten Lippe 31 und der zweiten Lippe 32 befinden sich keine elektrischen Bauteile auf der Rückseite des Substrats 20.

## Patentansprüche

1. Vorrichtung zur Bestimmung der Masse eines strömenden Mediums mit einem in der zu messenden Strömung mittels einer Befestigung (21) gehaltenen Substrat (20), auf welchem sich ein schichtförmiger, temperaturabhängiger Meßwiderstand ($R_H$) befindet sowie ein über eine Widerstandserfassungsanordnung (3) in Abhängigkeit von der Masse des strömenden Mediums regelbarer Heizwiderstand ($R_S$), der ebenfalls schichtförmig ist und vom Meßwiderstand ($R_H$) elektrisch isoliert überlagert wird, wobei die Fläche des Heizwiderstandes ($R_S$) größer ist als die Fläche des Meßwiderstandes ($R_H$) und sich der Heizwiderstand ($R_S$) weiter als der Meßwiderstand ($R_H$) in Richtung auf die Befestigung (21) hin erstreckt, dadurch gekennzeichnet, daß senkrecht zur Strömungsrichtung (23) ein durch das Substrat (20) verlaufender Schlitz (26) vorgesehen ist und Meßwiderstand ($R_H$) und Heizwiderstand ($R_S$) auf dem Teil des Substrates (20) ausgebildet sind, welcher sich stromabwärts des Schlitzes (26) erstreckt und Meßwiderstand ($R_H$) und Heizwiderstand ($R_S$) jeweils auf einer anderen der Flachseiten des Substrates (20) ausgebildet sind

2. Vorrichtung nach Anspruch 1, dadurch gekennzeichnet, daß das Substrat (20) einseitig befestigt ist und der Schlitz (26) sich, vom der Befestigung (21) abgewandten Rand des Substrates (20) ausgehend, in Richtung auf die Befestigung (21) hin erstreckt.

3. Vorrichtung nach Anspruch 2, dadurch gekennzeichnet, daß der Heizwiderstand ($R_S$) stromaufwärts durch den Schlitz (26) und stromabwärts durch eine Abströmkante (36) des Substrats (20) begrenzt ist.

4. Vorrichtung nach Anspruch 3, dadurch gekennzeichnet, daß sich auf dem Substrat (20) stromaufwärts des Schlitzes (26) ein Kompensationswiderstand ($R_K$) befindet.

5. Vorrichtung nach Anspruch 4, dadurch gekennzeichnet, daß das Substrat (20) stromaufwärts des Schlitzes (26) mit einem zum Schlitz (26) parallel verlaufenden weiteren Schlitz (25) versehen ist und einerseits des weiteren Schlitzes (25) ein temperaturabhängiger Filmwiderstand ($R_{K1}$) und andererseits des weiteren Schlitzes (25) ein Schichtwiderstand ($R_1$) auf dem Substrat aufgetragen ist und Filmwiderstand ($R_{K1}$) und Schichtwiderstand ($R_1$) zusammen den Kompensationswiderstand ($R_K$) bilden.

6. Vorrichtung nach Anspruch 5, dadurch gekennzeichnet, daß der Filmwiderstand ($R_{K1}$) bündig mit dem Schlitz (25) bzw. einer Anströmkante (35) des Substrates (20) abschließt.

7. Vorrichtung nach Anspruch 6, dadurch gekennzeichnet, daß Heizwiderstand ($R_S$) und Filmwiderstand ($R_{K1}$) sich in dem der Befestigung (21) abgewandten Teil des Substrates (20) befinden und bis zu dem der Befestigung (21) abgewandten Rand des Substrates (20) reichen.

8. Vorrichtung nach Anspruch 7, dadurch gekennzeichnet, daß auch der Meßwiderstand ($R_H$) bis zu dem der Befestigung (21) abgewandten Rand des Substrates (20) reicht.

9. Vorrichtung nach einem der Ansprüche 5 bis 8, dadurch gekennzeichnet, daß Meßwiderstand ($R_H$) und Filmwiderstand ($R_{K1}$) den gleichen Quadratwiderstand aufweisen und auf der gleichen Flachseite des Substrates (20) ausgebildet sind.

10. Vorrichtung nach einem der Ansprüche 5 bis 8, dadurch gekennzeichnet, daß der individuelle Widerstand der Widerstände ($R_H$, $R_S$, $R_{K1}$, $R_1$) durch Mäanderschnitte festgelegt ist.

## Claims

1. Device for determining the mass of a flowing medium, having a substrate (20) which is held in the flow to be measured by means of a mounting(21) and on which there are situated a layer-shaped, temperature-dependent measuring resistor ($R_H$) and a heating resistor ($R_S$), which can be controlled via a resistance sensing arrangement (3) as a function of the mass of the flowing medium, and which is likewise layer-shaped and has superimposed on it the measuring resistor ($R_H$) in an electrically isolating fashion, the surface of the heating resistor ($R_S$) being larger than the surface of the measuring resistor ($R_H$),and a heating resistor ($R_S$) extending further than the measuring resistor ($R_S$) in the direction of the mounting (21), characterised in that a slot (26) extending through the substrate (20) is provided perpendicular to the direction of flow (23), and the measuring resistor ($R_H$) and heating resistor ($R_S$) are constructed on the part of the substrate (20) which extends downstream of the slot (26), and the measuring resistor ($R_H$) and heating resistor ($R_S$) are respectively constructed on another of the flat sides of the substrate (20).

2. Device according to Claim 1, characterised in that the substrate (20) is mounted on one side and the slot (26) extends, starting from the edge of the substrate (20) averted from the mounting (21), in the direction of the mounting (21).

3. Device according to Claim 2, characterised in that the heating resistor (As) is limited upstream by the slot (26) and downstream by the trailing edge (36) of the substrate (20).

4. Device according to Claim 3, characterised in that a compensating resistor ($R_K$) is situated on the substrate (20) upstream of the slot (26).

5. Device according to Claim 4, characterised in that the substrate (20) is provided upstream of the slot (26) with a further slot (25) extending parallel to the slot (26), and a temperature-dependent film resistor ($R_{K1}$) is applied on one side of the further slot (25) and a layer resistor ($R_1$) is applied on the substrate on the other side of the further slot (25), and the film resistor ($R_{K1}$) and layer resistor ($R_1$) together form the compensating resistor ($R_K$).

6. Device according to Claim 5, characterised in that the film resistor ($R_{K1}$) terminates flush with the slot (25) or a leading edge (35) of the substrate (20).

7. Device according to Claim 6, characterised in that the heating resistor ($R_S$) and film resistor ($R_{K1}$) are situated in the part of the substrate (20) averted from the mounting (21), and reach up to the edge of the substrate (20) averted from the mounting (21).

8. Device according to Claim 7, characterised in that the measuring resistor ($R_H$) also reaches up to the edge of the substrate (20) averted from the mounting (21).

9. Device according to one of Claims 5 to 8, characterised in that the measuring resistor ($R_H$) and film resistor ($R_{K1}$) have the same area resistance and are constructed on the same flat side of the substrate (20).

10. Device according to one of Claims 5 to 8, characterised in that the individual resistance of the resistors ($R_H$, $R_S$, $R_{K1}$, $R_1$) is determined by meandering cuts.

## Revendications

1. Dispositif pour déterminer la masse d'un fluide en écoulement, avec un substrat (20) maintenu dans l'écoulement à mesurer au moyen d'une fixation (21), et sur lequel se trouve une résistance de mesure ($R_H$) en forme de couches, dépendante de la température, ainsi qu'une résistance chauffante ($R_S$) susceptible d'être réglée par l'intermédiaire d'un agencement de détection de résistances (3) en fonction de la masse du fluide en écoulement, et qui est également en forme de couches et disposée au-dessous de la résistance de mesure ($R_H$) en en étant isolée électrique-ment, cependant que la surface de la résistance chauffante ($R_S$) est plus grande que la surface de la résistance de mesure ($R_H$) et que la résistance chauffante ($R_S$) s'étend plus loin en direction de la fixation (21) que la résistance de mesure ($R_H$), dispositif caractérisé en ce que, perpendiculairement à la direction (23) de l'écoulement, il est prévu une fente (26) s'étendant à travers le substrat (20), et la résistance de mesure ($R_H$) ainsi que la résistance chauffante ($R_S$) sont réalisées sur la partie du substrat (20) qui s'étend en aval de la fente (26), et la résistance de mesure ($R_H$) et la résistance chauffante ($R_S$) sont respectivement réalisées sur les faces planes opposées du substrat (20).

2. Dispositif selon la revendication 1, caractérisé en ce que le substrat (20) est fixé d'un côté et la fente (26) s'étend depuis le bord, opposé à la fixation (21), du substrat (20) en direction de la fixation (21).

3. Dispositif selon la revendication 2, caractérisé en ce que la résistance chauffante ($R_S$) est limitée en amont par la fente (26) et en aval par un bord d'écoulement (36) du substrat (20).

4. Dispositif selon la revendication 3, caractérisé en ce qu'une résistance de compensation ($R_K$) se trouve sur le substrat (20) en amont de la fente (26).

5. Dispositif selon la revendication 4, caractérisé en ce que le substrat (20) est muni en amont de la fente (26) d'une autre fente (25) s'étendant parallèlement à la fente (26), tandis que d'un côté de cette autre fente (25) est rapportée sur le substrat, une résistance en film ($R_{K1}$) dépendant de la température et que, de l'autre côté de cette autre fente (25) est rapportée sur le substrat, une résistance en couches ($R_1$), la résistance en film ($R_{K1}$) et la résistance en couches ($R_1$) constituant conjointement la résistance de compensation ($R_K$).

6. Dispositif selon la revendication 5, caractérisé en ce que la résistance en film ($R_{K1}$) se termine en affleurement avec la fente (25) ou bien avec un bord (35) situé en amont du substrat (20).

7. Dispositif selon la revendication 6, caractérisé en ce que la résistance chauffante ($R_S$) et la résistance en film ($R_{K1}$) se trouvent dans une partie du substrat (20) opposée à la fixation (21), et s'étendent jusqu'au bord, opposé à la fixation (21), du substrat (20).

8. Dispositif selon la revendication 7, caractérisé en ce que la résistance de mesure ($R_H$) s'étend également jusqu'au bord, opposé à la fixation (21), du substrat (20).

9. Dispositif selon une des revendications 5 à 8, caractérisé en ce que la résistance de mesure ($R_H$) et la résistance en film ($R_{K1}$) ont la même résistance par unité de surface et sont réalisées sur la même face plane du substrat (20).

10. Dispositif selon une des revendications 5 à 8, caractérisé en ce que la résistance individuelle des résistances ($R_H$, $R_S$, $R_{K1}$, $R_1$) est fixée par des découpes en méandres.

Fig.1

Fig.2

Fig.3